(19) Europäisches Patentamt
European Patent Office
Office européen des brevets

(11) Veröffentlichungsnummer : **0 084 141**
**B1**

(12) # EUROPÄISCHE PATENTSCHRIFT

(45) Veröffentlichungstag der Patentschrift : **05.03.86**

(51) Int. Cl.⁴ : **C 08 F283/06**, C 08 G 18/63

(21) Anmeldenummer : **82111766.0**

(22) Anmeldetag : **18.12.82**

(54) **Polymerisathaltige, aromatische Polyether-Polyamine, Verfahren zur Herstellung dieser Polyamine und deren Verwendung als Aufbaukomponente zur Herstellung von Polyurethanen.**

(30) Priorität : **02.01.82 DE 3200021**

(43) Veröffentlichungstag der Anmeldung : **27.07.83 Patentblatt 83/30**

(45) Bekanntmachung des Hinweises auf die Patenterteilung : **05.03.86 Patentblatt 86/10**

(84) Benannte Vertragsstaaten : **BE DE FR GB IT**

(56) Entgegenhaltungen :
**EP-A- 0 061 627**
**US-A- 3 385 829**
**US-A- 3 875 258**
**US-A- 4 286 074**

(73) Patentinhaber : **BAYER AG**
**Konzernverwaltung RP Patentabteilung**
**D-5090 Leverkusen 1 Bayerwerk (DE)**

(72) Erfinder : **Ballé, Gerhard, Dr.**
**Nietzschestrasse 14**
**D-5090 Leverkusen 1 (DE)**
Erfinder : **Rasshofer, Werner, Dr.**
**Wolfskaul 10**
**D-5000 Köln 80 (DE)**
Erfinder : **Schoberth, Winfried, Dr. c/o Mobay Chemical Corp.**
**Penn Lincoln Parkway West**
**Pittsburgh Penn. 15205 (US)**

**EP 0 084 141 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Gegenstand der Erfindung sind polymerisathaltige Polyether-Polyamine mit endständigen, aromatisch gebundenen Aminogruppen und ein Verfahren zur Herstellung aus Polyether-Polyaminen mit aromatischen Aminogruppen durch radikalische in situ-Polymerisation bzw. -Propfpolymerisation mit einem oder mehreren ethylenisch ungesättigten Monomeren, vorzugsweise mit Acrylnitril/Styrol-Gemischen. Es werden nach dieser Verfahrensweise polymerisathaltige, aromatische Polyether-Polyamine mit einer niedrigen Viskosität und leichten Verarbeitbarkeit erhalten. Weiterhin wird die Verwendung derartig hergestellter, relativ niederviskoser, polymerisathaltiger, aromatische Aminogruppen enthaltender Polyether-Polyamine als Aufbaukomponente bei Polyurethansynthesen beansprucht.

Es ist bekannt, daß Polyurethane, die unter Verwendung von sogenannten Polymerpolyolen, die durch Polymerisate oder Copolymerisate olefinisch ungesättigter Monomerer überwiegend pfropfmodifizierte Polyetherpolyole darstellen, hergestellt werden, sich durch ein verbessertes Eigenschaftsniveau gegenüber nicht-modifizierten Polyetherpolyolen auszeichnen. Insbesondere wird die Härte und Tragfähigkeit von Polyurethan-Weichschaumstoffen günstig beeinflußt, so daß niedrigere Raumgewichte eingestellt und Rohmaterialeinsparungen erzielt werden können. Darüber hinaus verleihen diese Polymerpolyole Weichschaumstoffen eine größere Offenzelligkeit und wirken dadurch einer Schrumpfung der frischen Schaumstoffe bei der Lagerung entgegen. Schließlich lassen sich mit Hilfe der Polymerpolyole (bei geeigneter Auswahl des Basispolyethers) sogenannte hochelastische, kalthärtende Schaumstoffe herstellen, wobei — im Gegensatz zu konventionellen Verfahren zur Herstellung derartiger Schaumstoffe — keine speziellen Polyisocyanate mit abgestimmter Reaktivität benötigt werden, sondern marktgängige Standardprodukte, insbesondere das bei der Weichschaumherstellung überwiegend verwendete Toluylendiisocyanat, eingesetzt werden können.

Neben Polyetherpolyolen finden auch Polyetherpolyamine als Ausgangsmaterialien zur Polyurethanherstellung Verwendung. Polyetherpolyamine können dabei nach einer Reihe von Verfahren hergestellt werden, wie sie noch im einzelnen erläutert werden. Die Polyetherpolyamine zeichnen sich im allgemeinen durch eine höhere Reaktivität, sowie durch veränderte Eigenschaften infolge der Ausbildung von Harnstoffgruppen anstelle von Urethangruppen bei der Umsetzung mit Polyisocyanaten aus.

In der US-PS 4 286 074 wird auch die Polymermodifizierung von Aminoendgruppen tragenden Polyethern durch Pfropfung mit ungesättigten Monomeren beansprucht. Zur Herstellung von Aminoendgruppen tragenden Polyethern wird die Addition der endständigen Hydroxylgruppen von Polyetherpolyolen an Acrylnitril und eine anschließende Hydrierung der Nitrilgruppen genannt, die zu Polyethern mit endständigen primären, aliphatisch gebundenen Aminogruppen führen soll.

Es ist bekannt, daß NH-Gruppen bei Umsetzung mit Acrylnitril leicht cyanethyliert werden. In der Tat zeigen Versuche, bei denen aliphatisch gebundene, primäre Aminoendgruppen tragende Polyether-Polyamine unter den Bedingungen der Pfropfpolymerisation mit Acrylnitril und/oder Acrylnitril/Styrol-Gemischen behandelt wurden, daß in erheblichem Ausmaß Cyanethylierung zu tertiären und sekundären Aminogruppen eintritt, während nur noch geringe Anteile primärer Aminogruppen erhalten bleiben. Daraus folgt, daß die Pfropfung von solchen aliphatischen Polyetheraminen mit Acrylnitril oder Acrylnitril enthaltenden Monomermischungen, insbesondere den in der Polymerpolyol-Technologie ausschließlich verwendeten Acrylnitril/Styrol-Gemischen, zu einem teilweisen Verlust der Funktionalität führt. Derartige gepfropfte Polyether-Polyamine sind als Aufbaukomponente für Polyurethankunststoffe wenig geeignet, da sie zu mehr oder minder großem, z. T. erheblichem, Kettenabbruch führen. Es stellte sich die Aufgabe, zu mit Vinylmonomeren, insbesondere mit Acrylnitril und Styrol, modifizierten, sogenannten gepfropften Polyether-Polyaminen zu gelangen, wobei diese « Polymer-Polyamine » eine möglichst hohe und berechenbare Funktionalität aufweisen sollen, andererseits eine möglichst gute Fließfähigkeit und niedrige Viskosität trotz hoher Pfropfanteile aufweisen sollen.

Es wurde nun gefunden, daß man derartige Polymer-Polyamine herstellen kann, wenn man als Ausgangsmaterialien Polyether-Polyamine mit im wesentlichen endständigen, aber aromatisch gebundenen Aminogruppen, verwendet und diese Polyether-Polyamine mit aromatisch gebundenen primären Aminoendgruppen unter den Bedingungen der Pfropfpolymerisation mit den Vinylmonomeren, insbesondere mit Acrylnitril und Styrol, umsetzt. Es hat sich gezeigt, daß unter diesen Bedingungen der Pfropfpolymerisation die aromatischen Polyetherpolyamine praktisch nicht der Cyanethylierung unterliegen, so daß keine Beeinträchtigung der Funktionalität eintritt. Die erfindungsgemäß hergestellten aromatischen Polyether-Polyamine zeigen auch eine niedrigere Viskosität und bessere Handhabbarkeit im Polyurethan-Anwendungsbereich, als andersartig hergestellte aromatische, polymermodifizierte Polyether-Polyamine.

So wurde bereits entsprechend einer nicht vorveröffentlichten DE-OS 3 112 118 versucht, Polyether-Polyamine herzustellen, welche Polymerisate gelöst, dispergiert und/oder gepfropft enthalten, indem man die durch in situ-Polymerisation von Vinylmonomeren in Polyetherpolyolen erhältlichen « Polymer-Polyole » mit einem Polyisocyanat im Überschuß umsetzt und die erhaltenen, polymerhaltigen NCO-Prepolymere durch alkalische Verseifung mit Alkalihydroxiden und Freisetzung der Aminogruppen aus den entstandenden Carbamatgruppen polymerisathaltige Polyether-Polyamine zu erhalten. Die Herstellung nach diesem Verfahren erfolgt beispielsweise dadurch, daß man in erster Stufe ein Urethangruppen enthaltendes NCO-funktionelles Prepolymeres aus

a) zwei- oder mehrwertigen Polyoxyalkylenetherpolyolen mit einem Molekulargewicht von 1 000 bis 10 000, vorzugsweise 2 000 bis 6 000, welche 1 bis 60 Gew.-%, vorzugsweise 5 bis 40 Gew.-%, Polymerisate und/oder Copolymerisate ungesättigter Monomerer aufgepfropft enthalten und gegebenenfalls weitere Gruppen wie Harnstoff-, Biuret- und/oder Allophanatgruppen aufweisen und gegebenenfalls

b) niedermolekularen Kettenverlängerungsmitteln mit Molekulargewichten von 18 bis 400, sowie

c) einem Überschuß eines organischen Diisocyanats

durch Reaktion mit einem wäßrig-alkalischen, gegebenenfalls mischbare organische Lösungsmittel enthaltenden Medium, zu polycarbaminsauren Salzen umsetzt, und diese in einem zweiten Schritt unter Abspaltung von Kohlendioxid in das entsprechende Urethangruppen enthaltende, polymermodifizierte Polyether-Polyamin überführt.

Als ein gewisser Nachteil an diesem Herstellungsverfahren hat sich erwiesen, daß die Produkte eine relativ hohe Viskosität besitzen. Im Gegensatz zu den nicht durch aufgepfropfte Polymerisate oder Copolymerisate modifizierten Analogen, wie sie in der DE-A 2 948 419, sowie in den DE-OS bzw. EP-A : DE-OS 3 039 600, DE-OS 3 035 639, EP-A 71 834, EP-A 71 138 und EP-A 71 139 beschrieben sind, besitzen sie im allgemeinen eine salben- bis pastenartige Konsistenz, so daß ihre Verarbeitbarkeit nach der Polyurethantechnologie bei einer Reihe von Anwendungszwekken zu wünschen übrig läßt.

Bei Versuchen, diese Schwierigkeit zu überwinden, hat sich überraschend gezeigt, daß man Produkte von wesentlich geringerer Viskosität und besserer Verarbeitbarkeit, sowie günstigerer Reaktivität gegenüber Isocyanatverbindungen dann erhält, wenn man im Unterschied zu der eigenen, unveröffentlichten Patentanmeldung P 3 112 118 nicht von mit Polymerisaten und/oder Copolymerisaten modifizierten Polyetherurethan-NCO-Prepolymeren aus Polymerisat-modifizierten Polyether-polyolen und überschüssigen Polyisocyanaten, ausgeht, sondern polymerisatfreie, gegebenenfalls Harnstoff-, Biuret-, Allophanat-, Cyanurat-, Amid-, Ester- und/oder Urethangruppen enthaltende Polyether-NCO-Prepolymere nach dem alkalischen NCO-Verseifungsverfahren in die entsprechenden Polyether-Polyamine überführt und erst diese durch in situ-Polymerisation eines oder mehrerer ungesättigter Vinylmonomerer zu aufgepfropften Polymerisaten und/oder Copolymerisaten modifiziert.

Es soll daher ein verbessertes Verfahren zur Herstellung von endständige, aromatische Aminogruppen aufweisenden Polyether-Polyaminen, welche Polymerisate und/oder Copolymerisate ungesättigter Verbindungen, vorzugsweise Pfropf (co)polymerisate, sowie gegebenenfalls weitere Bindungen wie Harnstoff-, Biuret-, Allophanat-, Cyanurat-, Amid-, Ester- und/oder Urethangruppen enthalten, aufgezeigt werden.

Die neue Verfahrensweise besteht im wesentlichen darin, daß man Polyetherpolyamine mit aromatischen Aminoendgruppen der radikalischen *in situ*-Polymerisation mit einem oder mehreren ethylenisch ungesättigten Monomeren, vorzugsweise Acrylnitril/Styrol-Gemische, unterwirft.

Eine Modifizierung von Polyetherpolyaminen mit aliphatisch gebundenen endständigen Aminogruppen durch radikalische in situ-Polymerisation ist nicht Gegenstand dieser Anmeldung.

Gegenstand der Erfindung ist ein Verfahren zur Herstellung von niederviskosen, leicht verarbeitbaren, polymermodifizierten Polyether-Polyaminen mit endständigen aromatischen Aminogruppen, dadurch gekennzeichnet, daß man

a) endständige aromatische Aminogruppen tragende Polyether-Polyamine, welche ein Molekulargewicht von 800 bis 10 000, vorzugsweise 1 200 bis 6 000, und einen Gehalt von 0,3-16 Gew.-% an aromatischen Aminogruppen besitzen,

b) der radikalischen in situ-Polymerisation mit einem oder mehreren olefinisch ungesättigten Monomeren (vorzugsweise Acrylnitril und/oder Styrol und gegebenenfalls Methacrylsäuren oder ihren Alkylestern),

in solchen Mengen unterwirft, daß der Polymerisat- bzw. Pfropfpolymerisatanteil im polymermodifizierten aromatischen Polyether-Polyamin 1 bis 60 Gew.-%, bevorzugt 5 bis 50 Gew.-%, besonders bevorzugt 10 bis 40 Gew.-%, beträgt. Weiterer Gegenstand der Erfindung sind polymerisathaltige Polyether-Polyamine verbesserter Verarbeitbarkeit nach dem erfindungsgemäßen Verfahren der radikalischen in situ-Polymerisation in aromatischen Polyetheraminen. Die (Co)Polymerisate können gelöst, dispergiert und/oder gepfropft, vorzugsweise gepfropft, vorliegen.

Die als Ausgangsbasis für die in situ-Polymerisation dienenden Polyether-Polyamine mit endständigen, aromatisch gebundenen Aminogruppen können auf verschiedenen Wegen hergestellt werden.

So läßt sich Isatosäureanhydrid unter Abspaltung von $CO_2$ mit OH-funktionellen Polyethern zu o-Amino-benzoesäure-ester-Derivaten umsetzen (DE-A 2 019 432, 2 619 840, 2 648 774, 2 648 825, 2 916 545 und US-PS 4 180 644). Die Einwirkung von Nitrophenylisocyanaten oder Nitrobenzoesäuren bzw. -estern auf Polyetherpolyole und anschließende Hydrierung der Nitrogruppen führt ebenfalls zu Polyetheraminen mit endständigen aromatisch gebundenen Aminogruppen (vgl. DE-PS 1 495 763, Beispiel 1 und US-PS 2 888 439).

Weitere Verfahren der Addition von Isocyanatoazobenzol-Derivaten an Polyetherpolyole und nachfolgende Reduktion an der Azogruppe zur Gewinnung von aromatischen Aminen werden in der FR-PS 1 474 551 beschrieben. In der DE-B 1 270 046 wird ein Verfahren zur Herstellung definierter, Polyalkylenglykolether-Segmente enthaltender, primärer aromatischer Amine beschrieben, bei dem man Umsetzungsprodukten von aromatischen Di-oder Triisocyanaten mit Polyalkylenglykolethern und/oder Polyalkylenglykolthioethern, vorzugsweise solchen mit Molekulargewichten zwischen 400 und 4 000, mit

sekundären oder tertiären Carbinolen umsetzt und anschließend (gegebenenfalls in Gegenwart saurer Katalysatoren) in einem inerten Lösungsmittel einer thermischen Spaltung unterwirft.

Gemäß der BE-PS 675 425 können solche Carbinoladdukte auch in einer säurekatalysierten Reaktion zu den entsprechenden Aminen gespalten werden.

Gegenstand der DE-B 1 694 152 ist die Herstellung von mindestens zwei endständige Aminogruppen aufweisenden Polyetheraminen durch Umsetzung von NCO-Prepolymeren aus einem Polyetherpolyol und überschüssigem Polyisocyanat mit Aminophenylethylamin oder anderen araliphatischen Diaminen mit abgestufter Reaktivität (NCO : NH-Verhältnis = 1 : 1,5 bis 1 : 5). Nicht umgesetztes Amin muß dabei in einem weiteren Schritt sorgfältig entfernt werden, da es im allgemeinen zu sehr kurzen Verarbeitungszeiten führt und auch selbst als Reaktionspartner auftritt.

Eine andere Synthesemöglichkeit für Urethangruppen aufweisende Polyamine wird in der FR-PS 1 415 317 beschrieben. Urethangruppenhaltige NCO-Prepolymere werden dabei mit Ameisensäure in die N-Formylderivate überführt, die dann zu endständigen aromatischen Aminen verseift werden.

Auch die Reaktion von NCO-Prepolymeren mit Sulfaminsäure gemäß DE-B 1 555 907 führt zu Verbindungen mit endständigen Aminogruppen.

Weitere Verfahren zur Herstellung von höhermolekularen, endständige Aminogruppen aufweisenden Verbindungen werden auch in der DE-B 1 122 254 und DE-B 1 138 220 genannt.

Außerhalb des Rahmens der Erfindung liegt die Umsetzung von ungesättigten Monomeren mit Polyether-Polyaminen mit endständigen aliphatischen Aminogruppen oder auch Hydrazid- oder Semicarbazid-Gruppen, da diese sich in unerwünschter Weise mit dem bevorzugt eingesetzten monomeren Acrylnitril addierend umsetzen. Beispiele sind Verfahren entsprechend der DE-B 1 694 152 unter Verwendung von Hydrazin als überschüssigem Diamin oder auch die Herstellung höhermolekularer, aliphatischer, sekundärer und primärer Aminogruppen aufweisender Voraddukte nach DE-B 1 215 373 durch Umsetzung höhermolekularer Hydroxylverbindungen mit Ammoniak in Gegenwart von Katalysatoren unter Druck bei hohen Temperaturen oder gemäß US-PS 3 044 989 durch Umsetzung höhermolekularer Polyhydroxylverbindungen mit Acrylnitril unter anschließender katalytischer Hydrierung. Auch durch Umsetzung von NCO-Prepolymeren mit Hydroxylgruppen aufweisenden aliphatischen oder cycloaliphatischen Enaminen, Aldiminen oder Ketiminen und anschließende Hydrolyse erhält man gemäß DE-A 2 542 536 bzw. US-PS 3 865 791 höhermolekulare, endständige aliphatische Aminogruppen aufweisende Verbindungen, die nicht für das erfindungsgemäße Verfahren geeignet sind.

Demgegenüber werden jedoch besonders geeignete, aromatische Aminoendgruppen aufweisende Polyetherurethane dann erhalten, wenn man entsprechende NCO-Prepolymere aus Polyether und überschüssigen Mengen an aromatischen Polyisocyanaten mit geringfügig überschüssigen, wäßrigen oder wäßrig/alkoholischen (Erd)-Alkalilaugen vermischt, die entstandenen (Erd) Alkalicarbamate mit Säuren in die Amin(salze) überführt und gegebenenfalls aus den Salzen das Amin mittels Alkali freisetzt. Derartige NCO-Prepolymere enthalten Urethangruppen, können jedoch noch weitere Gruppen wie z. B. Harnstoff- und/oder Biuret- und/oder Cyanurat- und/oder Carbodiimid- und/oder Allophanat- und/oder Uretdion-Gruppen enthalten, wenn man entsprechende Isocyanate mit solchen Gruppen, oder zusätzlich gegebenenfalls Verbindungen wie aromatische Diamine bei der Prepolymerbildung einsetzt oder die NCO-Prepolymere durch Reaktion mit Wasser oder aromatischen Diaminen modifiziert.

In einer eigenen, nicht vorveröffentlichten DE-OS 3 039 600 wird eine verbesserte Aufarbeitung der durch Verseifung der NCO-Polyetherprepolymere (mit aromatischen NCO-Gruppen) mit Basen erhaltenen Carbamate durch Zusatz von sauren Ionenaustauschern beschrieben, wodurch die aromatischen Polyamine einfacher zugänglich werden.

In einer weiteren, nicht vorveröffentlichten EP-A 71 834 wird eine besonders vorteilhafte und einfache Aufarbeitung der alkalischen Verseifungsprodukte von aromatischen NCO-Polyether-Prepolymeren beschrieben, indem man eine einfache thermische Zerlegung oder Lösungsmittelextraktion der Carbamatzwischenstufe vornimmt und dadurch das aromatische Polyetherpolyamin in technisch vorteilhafter Weise isoliert.

Nach dem erfindungsgemäßen Verfahren werden nicht nur bei der Herstellung leichter aufarbeitbare, niederviskosere, polymerisathaltige Polyetherpolyamine mit aromatischen Endgruppen erhalten, die sich auch technisch einfacher dosieren und als Aufbaukomponente zur Herstellung von Polyurethanharnstoffen unkomplizierter einsetzen lassen, sondern es zeigt sich auch, daß eine (Mit)-Verwendung der erfindungsgemäßen, polymerisatmodifizierten Polyether-Polyamine überraschend vorteilhafte Eigenschaften, z. B. verbesserte Stauchhärte, auch gegenüber summarisch scheinbar gleichartig zusammengesetzten polymerisathaltigen Polyether-Polyaminen nach anderer Herstellungsweise aufweisen (vgl. Beispiel 5).

An der unterschiedlichen Viskosität wie auch der besseren anwendungstechnischen Eigenschaften in den damit aufgebauten Polyurethanharnstoffen zeigt sich, daß die erfindungsgemäßen, durch in situ-Polymerisation von Monomeren in Polyether-Polyaminen mit aromatischen endständigen Aminogruppen hergestellten, polymermodifizierten Polyether-Polyamine sich von den durch alkalische Verseifung von NCO-Prepolymeren auf der Basis polymermodifizierter Polyetherpolyole bei gleicher Bruttozusammensetzung deutlich unterscheiden. Die genaue Ursache der Unterschiede ist nicht bekannt.

Der vorteilhafte Aufbau der polymermodifizierten Polyether-Polyamine mit endständigen aromatischen Aminogruppen war auch dadurch überraschend, daß durch die Aminoendgruppen eine gewisse

Störung der radikalischen Polymerisation der ungesättigten Monomeren zu erwarten war, insbesondere, da aromatische Amine, z. T. als Kettenabbrecher bekannt sind.

Die erfindungsgemäße in situ-Polymerisation von Monomeren in den Polyetherpolyaminen mit aromatisch gebundenen Aminogruppen führt zu Dispersionen oder Lösungen von Polymerisaten bzw. Copolymerisaten in den als Substrat verwendeten Polyetherpolyaminen. Dabei ist damit zu rechnen, daß infolge von Übertragungsreaktionen auf die Polyetherketten ein mehr oder minder beachtlicher Anteil des Polyether-Polyamins in das Polymerisat eingebaut wird, so daß man den dispergierten bzw. gegebenenfalls gelösten Polymeranteil überwiegend als ein Pfropf(co)polymerisat aufzufassen hat.

Die als Ausgangsstoffe in der in situ-Polymerisation eingesetzten Polyether-Polyamine a) mit endständigen, aromatisch gebundenen Aminogruppen, sollen ein Molekulargewicht zwischen etwa 800 und 10 000, vorzugsweise 1 200 bis 7 000 und besonders bevorzugt 2 000 bis 6 000, aufweisen. Sie haben dabei einen Gehalt an aromatischen Aminogruppen von 0,3 bis 16 Gew.-%, vorzugsweise 0,45 bis 10,7 Gew.-% und besonders bevorzugt 0,5 bis 3,2 Gew.-%. Die Funktionalität der Polyether-Polyamine liegt im allgemeinen zwischen etwa 1,9 und 8, bevorzugt zwischen 1,95 und 4 und besonders bevorzugt zwischen 2 und 3. Die Polyetheramine mit aromatischen Aminogruppen können dabei nach den bereits angeführten unterschiedlichen Verfahren aufgebaut werden. Viele der generell bekannten Verfahren sind jedoch umständlich, teuer oder mit hohem Verfahrensaufwand verbunden. So sind etwa katalytische Reduktionen von Nitro- oder Azoverbindungen wie auch von Nitrilgruppen wenig praktikabel und auch die Umsetzung von NCO-Voraddukten auf Polyetherbasis mit Carbinolen, überschüssigen Polyaminen, Ameisensäure, Sulfaminsäure, araliphatischen Polyaminen und anderen bedeutet unnötige chemische Zwischenstufen und somit wenig tragbaren wirtschaftlichen Aufwand.

Besonders leicht zugängliche und bevorzugte Ausgangsmaterialien sind Polyetherpolyamine mit aromatischen Aminogruppen, welche durch alkalische Hydrolyse von NCO-Prepolymeren aus Polyetherpolyolen, gegebenenfalls niedermolekularen Kettenverlängerungsmitteln und überschüssigen aromatischen Polyisocyanaten erhalten werden (vgl. z. B. DE-A 2 948 819) und sich sowohl günstig aufarbeiten lassen wie auch eine günstige in situ-Pfropfpolymerisation ermöglichen.

Entsprechend den Ausgangsmaterialien bzw. der Verfahrensweise bei ihrer Herstellung enthalten die Polyetherpolyamine weitere Gruppen, z. B. Urethan-, Harnstoff-, Allophanat-, Biuret-, Isocyanurat-, Amid- und/oder Estergruppen, bzw. weitere Gruppierungen, wie sie in der Polyurethanchemie auftreten können, z. B. Carbodiimidgruppen, Uretdiongruppen, Uretonimingruppen und ähnliche Gruppierungen, wie sie durch Weiterreaktion von Isocyanatgruppen bzw. deren Modifizierung auftreten können. In praktisch allen Fällen enthalten die bevorzugten Polyether-Polyamine jedoch Urethangruppen aus der Umsetzung der Polyetherpolyole mit überschüssigen Mengen an Polyisocyanaten zu den NCO-Prepolymeren, die in die Polyether-Polyamine überführt werden.

Die zur Polyether-Polyamin-Herstellung eingesetzten, in der Regel 2 bis 8, vorzugsweise 2 bis 4, besonders bevorzugt 2 bis 3, Hydroxylgruppen aufweisenden Polyether sind solche der an sich bekannten Art und werden z. B. durch Polymerisation von Epoxiden wie Ethylenoxid, Propylenoxid, Butylenoxid, Tetrahydrofuran, Styroloxid oder Epichlorhydrin mit sich selbst oder durch Anlagerung dieser Epoxide, vorzugsweise von Ethylenoxid und/oder Propylenoxid, gegebenenfalls im Gemisch, in beliebigen Mischungsverhältnissen oder nacheinander, an Startkomponenten mit reaktionsfähigen Wasserstoffatomen wie z. B. Wasser, Alkohole, Ammoniak oder Amine, z. B. Ethylenglykol, Propylenglykol, Trimethylolpropan, Glycerin, Sorbit, Rohrzucker, Dianhydrosorbit, 4,4'-Dihydroxydiphenylpropan, Anilin, Ethanolamin, Diethanolamin, N-Methyl-diethanolamin oder Ethylendiamin hergestellt. Auch Succrosepolyether sowie auf Formit oder Formose gestartete Polyether kommen beispielsweise in Frage. Vielfach sind solche Polyether bevorzugt, die überwiegend (bis 90 Gew.-%, bezogen auf alle vorhandenen OH-Gruppen im Polyether) primäre OH-Gruppen aufweisen. Bevorzugt sind Polyalkylenoxid-Polyole auf Basis Ethylenoxid, Propylenoxid und Tetrahydrofuran, insbesondere Propylenoxidpolyether, welche bis 50 Mol-% $—CH_2 \cdot CH_2 \cdot O$-Einheiten enthalten.

Das Molekulargewicht der di- und mehrfunktionellen Polyetherpolyole liegt zwischen etwa 800 und 10 000, vorzugsweise zwischen 1 200 und 6 000, ihre Funktionalität ganz besonders bevorzugt zwischen 2 und 3.

Bei der Umsetzung der Polyetherpolyole mit den aromatischen Polyisocyanaten zum NCO-Prepolymer können in untergeordneten Mengen gegebenenfalls niedermolekulare, reaktive Wasserstoffgruppen aufweisende Verbindungen vom Molekulargewicht 18 bis etwa 399 mitverwendet werden. Diese auch als « Kettenverlängerungsmittel » bezeichneten Verbindungen mit OH—, $NH_2$—, NH—, Hydrazid- oder SH-Gruppen kommen dabei in Mengen von weniger als 0,5 Mol, vorzugsweise von 0,01 bis 0,2 Mol, pro Mol Polymerpolyol in Betracht. Geeignet sind hier Wasser, Diole wie Ethylenglykol, 1,2-Propylenglykol, Butandiol-2,3 und/oder -1,4, 2-Methylpropandiol, Neopentylglykol, Isophorondiamin, Neopentyldiamin, Toluylendiamin-2,4 und/oder -2,6 oder Tetraalkyldicyclohexylmethan-2,4'- und/oder -4,4'-Diamine, ferner Polyethylenoxid-, -propylenoxid- oder -tetramethylenoxid-Diole mit Molekulargewichten unter 399.

Durch diese Modifizierung werden gegebenenfalls weitere Urethan- und/oder Harnstoffgruppen, welche auch bei der Umsetzung mit den Polyisocyanaten gegebenenfalls Allophanat- oder Biuretgruppen ergeben, in das NCO-Prepolymer eingebaut.

Als Polyisocyanate kommen von leicht hydrolysierbaren Gruppen (abgesehen von den NCO-Gruppen) freie, aromatische und heterocyclische Polyisocyanate in Frage, wie sie z. B. in der DE-

A 2 854 384 auf den Seiten 8 bis 11 ausführlich aufgeführt werden. Bevorzugt sind aromatische Diisocyanate, z. B. 1,3- und 1,4-Phenylendiisocyanat, 2,4- und/oder 2,6-Toluylendiisocyanat, Diphenylmethan-4,4'-, -2,4'-, und/oder -2,2'-Diisocyanat, einschließlich seiner mono- bis tetra-Alkyl- und -Chlor-substituierten Derivate oder Naphthylen-1,5-diisocyanat. Ferner sind beispielsweise auch höherfunktionelle Polyisocyanate, z. B. Polyphenyl-polymethylen-polyisocyanate, wie sie durch Anilin-Formaldehyd-Kondensation und anschließende Phosgenierung erhalten werden, aber auch Isocyanuratgruppen, Urethangruppen, acylierte Harnstoffgruppen, Allophanatgruppen, Biuretgruppen oder Carbodiimidgruppen aufweisende Polyisocyanate einsetzbar.

Besonders bevorzugt werden aromatische Diisocyanate wie die Toluylendiisocyanate, Diphenylmethan-4,4'-, -2,4'-, und/oder -2,2'-Diisocyanat, einschließlich seiner mono- bis tetra-Alkyl- und -Chlor-substituierten Derivate oder Naphthylen-1,5-diisocyanat. Ferner sind beispielsweise auch hö-

Neben den genannten Verbindungen können auch beispielsweise organofunktionelle Polysiloxane, die z. B. zwei Hydroxyalkylgruppen aufweisen, oder auch Polyacetale oder Polythioether als höhermolekulare Verbindungen mit den für die Polyetherpolyole angegebenen Molekulargewichten und Funktionalitäten verwendet werden.

Die freie aromatische NCO-Gruppen aufweisenden NCO-Prepolymeren werden in an sich bekannter Weise durch Umsetzung der Reaktionspartner in der Schmelze oder in Lösung hergestellt. Das Äquivalentverhältnis von NCO-Gruppen zu aktiven Wasserstoffatomen (bevorzugt OH-Gruppen) ist in jedem Fall größer als 1, soll in der Regel zwischen 1,5 : 1 und 2,8 : 1 liegen. Selbstverständlich ist es möglich, einen noch größeren Überschuß an Polyisocyanat zu verwenden. Die Voraddukte haben je nach den gewählten Ausgangskomponenten im allgemeinen ölige bis wachsartige Konsistenz. Beträgt das NCO/OH-Verhältnis mehr als 2, so erhält man im wesentlichen nicht-vorverlängerte NCO-Voraddukte, während NCO/OH-Verhältnisse von unter 2 eine Erhöhung des mittleren Molekulargewichtes der Voraddukte zur Folge haben. Sollen Produkte mit sehr geringem Gehalt an monomeren Polyaminen erhalten werden, so müssen die NCO-Prepolymere noch einer Destillation unterworfen werden, bei der monomere Polyisocyanate entfernt werden, z. B. unter Verwendung eines Dünnschichtverdampfers. Bevorzugt werden NCO-Prepolymere mit aromatisch gebundenen NCO-Gruppen, die aus höhermolekularen Polyetherpolyolen, gegebenenfalls unter Mitverwendung von Kettenverlängerern der oben beschriebenen Art, und aromatischen Diisocyanaten im Äquivalentverhältnis von NCO/OH = 1,5 : 1 bis 2,8 : 1, insbesondere 1,5 : 1 bis 2 : 1 erhalten worden sind.

Der NCO-Gehalt der eingesetzten NCO-Prepolymere beträgt zwischen 0,5 und 30 Gew.-%, bevorzugt 1,2 bis 25 Gew.-%, aromatisch gebundener NCO-Gruppen. Zur Überführung der NCO-Prepolymeren in die Polyaminoverbindungen werden die Prepolymeren ohne Lösungsmittel oder in Form ihrer Lösungen verwendet. Vorzugsweise werden wassermischbare Lösungsmittel wie Dimethoxyethan, Diethylenglykoldimethylether, Dioxan oder Tetrahydrofuran eingesetzt. Weniger geeignete Lösungsmittel sind z. B. Kohlenwasserstoffe, chlorierte Kohlenwasserstoffe sowie niedere Aromaten. Man kann jedoch auch sekundäre Alkohole wie Isopropanol oder während der Hydrolysereaktion der NCO-Gruppen zu den Carbamatgruppierungen (bzw. Polyaminen) zwei- oder mehrfunktionelle Verbindungen wie diprimäre Alkohole, aromatische Diamine, z. B. 1,4-Butandiol oder 1,2-Propylenglykol mitverwenden, wobei eine Modifizierung des NCO-Prepolymers unter Einbau dieser Verbindungen erfolgen kann. Die Vermischung der NCO-Prepolymeren mit dem alkalischen Medium soll vorzugsweise zu einer möglichst niedrigen Temperatur der vermischten Reaktionslösung führen, um Nebenreaktionen möglichst auszuschließen. Die Temperatur in der Reaktionsmischung der Komponenten sollte möglichst unter 100 °C, besser unterhalb von 70 °C, vorzugsweise jedoch unterhalb von 40 °C, liegen.

Es wird daher vorzugsweise die Temperatur des basischen, niederviskosen Mediums bereits vor der Umsetzung möglichst tief gewählt, z. B. − 25 bis + 40 °C, zusätzlich kann während der Reaktion weiter gekühlt werden. Die zulässigen Reaktionstemperaturen hängen jedoch auch von der Art der Vermischung und Reaktionsführung ab. Die basische Hydrolyse wird im allgemeinen mit einer wäßrigen Lösung oder wäßrigen Mischung von Basen durchgeführt. Die minimale Menge an Wasser beträgt dabei die stöchiometrisch notwendige Menge von 1 Mol Wasser pro 1 Mol NCO.

Geeignete Basen sind z. B. Alkalihydroxide, Erdalkalihydroxide und Erdalkalioxide, niedermolekulare Alkalisilikate und Alkalialuminate, und organische Ammoniumhydroxide, z. B. Tetraalkylammoniumhydroxide. Besonders bevorzugt sind Natrium- und Kaliumhydroxid. Es können Basenkonzentrationen von z. B. 1 Teil Base auf 1 bis 100 Teile Wasser verwendet werden.

Die Reaktion der aromatischen NCO-Prepolymeren mit den Basen kann diskontinuierlich oder kontinuierlich ausgeführt werden. So kann das NCO-Prepolymer langsam in das basische Medium eingeführt, z. B. eingetropft oder maschinell z. B. durch Einspritzung über eine Düse geschehen, wobei durch intensives Rühren eine möglichst gute Verteilung angestrebt und gegebenenfalls durch Kühlung eine Einhaltung der Temperaturgrenzen angestrebt wird. In der für eine technische Produktion geeigneten kontinuierlichen Ausführungsform werden die NCO-Prepolymeren und die wäßrigen Basen auf getrennten Wegen einem gemeinsamen Reaktionsraum zudosiert, z. B. mittels eines Durchflußmischers intensiv vermischt und danach schnell ausgetragen. Im allgemeinen werden die Reaktionskomponenten bei etwa − 25 bis + 40 °C dem Durchflußmischer zugeführt, wobei die Temperaturen im Mischer deutlich ansteigen können.

Die durch das Vermischen der NCO-Verbindungen mit dem basischen Medium erhaltenen, Carbamatgruppen enthaltenden Verbindungen werden in die entsprechenden aromatische Aminogruppen enthaltenden Verbindungen umgewandelt. Dies kann dadurch geschehen, daß man die Carbamatgruppen enthaltenden Verbindungen thermisch in die aromatische Aminogruppen enthaltenden Verbindungen zerlegt, die Amine abtrennt oder aus den carbamathaltigen Lösungen durch Lösungsmittelextraktion isoliert. Dies ist besonders günstig, wenn man mit stöchiometrischen oder unterstöchiometrischen Mengen an Basen, bezogen auf aromatische NCO-Gruppen, die NCO-Heterolyse vorgenommen hat. Bei überschüssigen Mengen an Basen in der Hydrolysenstufe kann diese auch durch Zugabe von Mineralsäuren oder sauren Ionenaustauschern gebunden werden.

Die nach DE-A 2 948 419 und den nicht vorveröffentlichten Deutschen Offenlegungsschriften bzw. Europäischen Patentanmeldungen EP-A DE-OS 3 039 600 (EP-A 50275), DE-OS 3 035 639 (EP-A 48 369), EP-A 71 834, EP-A 71 138, EP-A 71 139 hergestellten Polyether-Polyamine mit aromatisch gebundenen primären Aminoendgruppen, welche Urethangruppen und gegebenenfalls weitere Gruppen enthalten, werden der radikalischen in situ-Polymerisation mit einem oder mehreren ethylenisch ungesättigten Monomeren unterworfen.

Als olefinisch ungesättigte Monomere verwendet man α,β-ungesättigte Nitrile, Vinylgruppen tragenden Aromaten, α,β-ungesättigte Mono- oder Polycarbonsäuren, Ester α,β-ungesättigter Mono- oder Polycarbonsäuren mit ein- oder mehrwertigen Alkoholen, Vinylester, Vinylhalogenide, Vinylidenhalogenide, α,β-ungesättigte Carbonsäureamide, Aminoalkylester, ungesättigter Mono- oder Polycarbonsäuren, Hydroxyalkylester, α,β-ungesättigter Mono- oder Polyhydroxycarbonsäuren, oder Ester der Vinylphosphonsäuren, gegebenenfalls in Mischung verschiedener Monomeren.

Zur in situ-Polymerisation geeignete olefinisch ungesättigte Monomere sind z. B. Vinylverbindungen wie Styrol, Vinyltoluol, Vinylacetat, Vinylpropionat, sowie Acryl- und Methacrylverbindungen wie Acryl- oder Methacrylsäure, deren $C_1$-$C_{12}$-Alkyl- oder -Cycloalkylester, etwa Methylmethacrylat, Ethylacrylat, Butylacrylat, Butylmethacrylat oder Cyclohexylacrylat, $C_2$-$C_{12}$-Hydroxyalkyl- oder -Hydroxycyclohexylester, etwa 2-Hydroxypropyl-acrylat, 4-Hydroxybutyl-acrylat oder 2-Hydroxyethyl-methacrylat, Aminoalkylester, etwa 2-N,N-Dimethylaminoethyl-methacrylat, ferner Acrylnitril, Methacrylnitril, Acrylamid oder Methacrylamid, sowie deren am Stickstoff substituierte Derivate, z. B. N-Methylolmethacrylamid oder N-Butoxymethyl-methacrylamid. Besonders bevorzugt verwendet man als ungesättigte Verbindungen Acrylnitril, Methacrylnitril, Styrol, α-Methylstyrol oder Vinyltoluol und gegebenenfalls untergeordnete Mengen an α, β-ungesättigten Mono- oder Polycarbonsäuren und/oder ihren Alkylestern, oder Gemische der ungesättigten Verbindungen.

Man verwendet etwa 1 bis 60 Gew.-% an olefinisch ungesättigten Monomeren, vorzugsweise 5-50 Gew.-%, besonders bevorzugt 10-40 Gew.-% — bezogen auf das gesamte Reaktionsgemisch.

Bevorzugt sind Mischungen aus Styrol und Acrylnitril im Gewichtsverhältnis 0 : 100 bis 60 : 40, bevorzugt 20 : 80 bis 50 : 50.

Als Initiatoren für die radikalische Polymerisation eignen sich die in der Polymerisationschemie üblichen organischen Peroxide und aliphatischen Azoverbindungen, insbesondere solche mit einer Halbwertszeit der thermischen Zersetzung von max. 5 Minuten bei der Polymerisationstemperatur. Es sind dies z. B. Benzoylperoxid, Lauroylperoxid, tert.-Butylperoctoat, tert.-Butylperpivalat oder Dicyclohexylperoxidicarbonat bzw. Azoisobutyronitril. Es hat sich als vorteilhaft erwiesen, die Pfropfreaktion möglichst zu fördern, da die Dispersion durch den in das Polymerisat eingebauten Polyetheranteil stabilisiert wird. Man verwendet demnach zweckmäßig Initiatoren, die in hohem Maße zur Schaffung radikalischer Zentren an den Kettenmolekülen des Polyetherpolyamins befähigt sind, etwa durch Abstrahieren eines Wasserstoffatoms. Diese sind insbesondere die Persäureester, z. B. das tert.-Butylperoctoat, tert.-Butylperpivalat oder auch Azoisobutyronitril, das in diesem System einen hohen Übertragungsgrad bewirkt.

Die Polymerisationsreaktion liefert im allgemeinen erst bei Polymerisationstemperaturen oberhalb 100 °C die erwünschten feinteiligen Dispersionen. Nach oben hin ist die Reaktionstemperatur durch die Siedepunkte in den Monomeren, sowie etwa mitverwendete Lösungsmittel, begrenzt, sofern man nicht unter autogenem Druck arbeitet. Günstige Polymerisationstemperaturen liegen im Bereich von 115 bis 135 °C, vorzugsweise 120 bis 130 °C. Organische inerte Lösungsmittel können in kleineren Anteilen mitverwendet werden, besonders geeignet ist hier Toluol, das leicht aus dem Produkt wieder abdestilliert werden kann.

Die Polymerisation kann auch in Gegenwart spezieller Pfropfüberträger, wie sie in der DE-A 2 837 026 beschrieben sind, durchgeführt werden. In der DE-A 2 915 610 wird beschrieben, daß verbesserte Polymerpolyole durch den Einbau geringer Mengen von Ammoniumsalzen α,β-ungesättigter Carbonsäuren erhalten werden, die bei noch relativ niedrigen Viskositäten sehr hohe Polymeranteile aufweisen können. Auch diese Verfahrensweise kann auf das vorliegende Verfahren übertragen werden, bzw. durch Mitverwendung einer kleinen Menge einer α,β-ungesättigten Carbonsäure als Comonomer kann eine elektrostatische Wechselwirkung zwischen dem dispergierten Polymeranteil und einem Teil der Aminoendgruppen des Substrates hergestellt werden, die die Stabilität der resultierenden Dispersionen beträchtlich erhöht und zu den erwünschten erniedrigten Viskositäten des Polymerpolyetherpolyamins führt. Mit Hilfe dieser Verfahrensweise ist es möglich, Polymerisat-modifizierte Polyetheramine mit Polymeranteilen von 1 bis 60 Gew.-% herzustellen. Bevorzugt werden Polymeranteile von 5 bis 50 Gew.-% und besonders bevorzugt solche von 10 bis 40 Gew.-%.

Die Durchführung des Verfahrens kann diskontinuierlich oder kontinuierlich erfolgen. Man kann z. B. eine Mischung, die das oder die Monomeren, den Initiator und gegebenenfalls einen Teil des einzusetzenden Polyether-Polyamins enthält, in das in einem mit Rührwerk ausgestatteten Reaktor auf die Polymerisationstemperatur vorerhitzte aromatische Polyetherpolyamin eindosieren oder aber die Mischung aller Reaktionsteilnehmer kontinuierlich in einen Reaktor einpumpen und das Produkt in gleichem Maße durch einen Überlauf entnehmen. Bei größeren Ansätzen im Technikumsmaßstab empfiehlt sich wegen der Möglichkeit der vorzeitigen Initiierung der Polymerisation im zu dosierenden Monomergemisch, den Initiator, gelöst in einem geeigneten Lösungsmittel, dem Monomerenstrom erst kurz vor dem Eintritt in den Reaktionsraum, gegebenenfalls über ein Mischaggregat, zuzuführen oder diese Lösung getrennt in den Reaktor einzubringen.

Die erfindungsgemäß aus den nicht-modifizierten Polyetherpolyaminen mit aromatischen, endständigen Aminogruppen durch in situ-Polymerisation von Monomeren erhaltenen Polymer-Polyether-Polyamine mit aromatischen Aminogruppen werden wegen ihres niedrigen Dampfdrucks und ihrer relativ niedrigen Viskosität und ihres günstigen Reaktivitätsverhaltens vorzugsweise als Reaktionspartner für Polyisocyanate oder Polyisocyanatderivate bei der Herstellung von gegebenenfalls zelligen Polyurethankunststoffen eingesetzt, wobei sie gegebenenfalls auch mit anderen niedermolekularen (Molekulargewicht etwa 32 bis 399) und/oder höhermolekularen (Molekulargewicht etwa 400 bis 15 000) Verbindungen mit gegenüber Isocyanaten reaktiven Gruppen kombiniert werden können. Besonders geeignet sind sie für Hochfrequenz-verschweißbare Weichschaumkunststoffe auf Polyurethanbasis. Weitere Verwendungszwecke der erfindungsgemäß hergestellten Polyamine sind z. B. Härter für Epoxid- und Phenolharze, sowie alle anderen an sich bekannten Reaktionen von Aminen wie Amid oder Polyamidbildung oder als Kupplungskomponenten für Diazofarbstoffe.

Die Verwendung der erfindungsgemäß hergestellten, aromatische Aminogruppen aufweisenden Polymer-Polyether-Polyamine zur Herstellung von homogenen und/oder zellförmigen Polyurethankunststoffen und Elastomeren oder Schaumstoffen erfolgt zusammen mit den üblichen Ausgangsstoffen für die Polyurethane nach an sich bekannten Durchführungsverfahren (vgl. z. B. DE-A 2 302 564, 2 432 764, 2 512 385, 2 513 815, 3 550 796, 2 550 797, 2 550 833, 2 550 860, 2 550 862 und 2 639 083).

Gegenstand der Erfindung ist somit auch die Verwendung der nach dem erfindungsgemäßen Herstellungsverfahren aus Polyether-Polyaminen mit aromatischen Aminoendgruppen durch radikalische in situ-Polymerisation mit ungesättigten Monomeren zugänglichen Polymer-Polyether-Polyamine mit aromatischen Aminogruppen als Aufbaukomponenten bei der Herstellung von homogenen und/oder zellförmigen Polyurethan-Kunststoffen-Elastomeren und -Schaumstoffen. Diese Verwendung ist beispielsweise gekennzeichnet durch Umsetzung von

A) Polyisocyanaten mit

B) Polyaminen, sowie gegebenenfalls

C) weiteren niedermolekularen und/oder höhermolekularen Verbindungen mit gegenüber Isocyanaten reaktiven Gruppen, gegebenenfalls

D) in Anwesenheit an sich bekannter Hilfs- und Zusatzstoffe, dadurch gekennzeichnet, daß als Komponente B) die nach dem erfindungsgemäßen Verfahren hergestellten Polymer-Polyether-Polyamine mit aromatischen Aminogruppen eingesetzt werden.

Als Polyisocyanate A) finden dabei im wesentlichen auch die bereits vorstehend für die NCO-Prepolymer-Herstellungen aufgeführten Verbindungen Verwendung. Weitere Beispiele sind aliphatische, cycloaliphatische, araliphatische, sowie gegebenenfalls weitermodifizierte Polyisocyanate, wie sie in der DE-A 2 854 384 auf den Seiten 8 bis 11 ausführlich, auch unter Aufzählung weiterer aromatischer oder heterocyclischer Polyisocyanate, aufgeführt werden. Als niedermolekulare und/oder höhermolekulare Verbindungen sind gegenüber Isocyanaten reaktive Gruppen (sog. « aktiv-H-Gruppen »), werden üblicherweise Verbindungen mit mindestens zwei gegenüber Isocyanaten reaktionsfähigen Wasserstoffatomen und einem Molekulargewicht in der Regel von 62 bis 10 000 verwendet. In der überwiegenden Menge setzt man dabei vorzugsweise Hydroxylgruppen aufweisende Verbindungen mit insbesondere 2 bis 8 Hydroxylgruppen, speziell solche vom Molekulargewicht 400 bis 8 000, vorzugsweise 600 bis 6 000, ein. Dies sind in der Regel 2 bis 8, vorzugsweise aber 2 bis 4, Hydroxylgruppen aufweisende Polyester, Polyether, Polythioether, Polyacetale, Polycarbonate und Polyesteramide oder deren Mischungen, wie sie für die Herstellung von homogenen und zellförmigen Polyurethanen an sich bekannt sind. Sie können mit weiteren, niedermolekularen, polyfunktionellen Verbindungen, wie vorzugsweise Polyolen, gegebenenfalls aber auch Polyaminen oder Polyhydraziden, mit Molekulargewichten von etwa 62 bis 399 kombiniert werden, um die Eigenschaften der Polyurethane zu modifizieren. Eine ausführliche Aufzählung geeigneter Polyhydroxylverbindungen wird in der DE-OS 2 854 384 auf den Seiten 11 bis 21 gegeben.

Als Komponenten C) können auch weitere Verbindungen, üblicherweise als Kettenverlängerungsmittel oder Vernetzungsmittel bezeichnet, mitverwendet werden. Diese Verbindungen mit Molekulargewichten zwischen 62 und etwa 399 weisen ebenfalls zwischen 2 bis 8, vorzugsweise 2 bis 4, für lineare Verbindungen vorzugsweise 2, gegenüber Isocyanaten reaktionsfähige Wasserstoffatome, insbesondere Hydroxylgruppen, auf. Beispiele für derartige Verbindungen, die auch als Mischungen verwendet werden können, sind z. B. Ethylenglykol, Butandiol-2,3, Butandiol-1,4, Neopentylglykol, 2-Methyl-1,3-propandiol, Trimethylolpropan, Pentaerythrit, Chinit, Sorbit, 4,4'-Dihydroxy-diphenylpropan, Di-hydroxyethylhydrochinon, aber auch Ethanolamin, Diethanolamin, N-Methyl-diethanolamin, N-tert.-Butyl-di-(β-hydroxypropylamin), Triethanolamin und 3-Aminopropanol. Weitere Beispiele für derartige Verbindungen werden in der DE-A 2 854 384 auf Seiten 20 bis 26 aufgeführt. Ferner können gegebenenfalls gegenüber Isocyanaten monofunktionelle Verbindungen in Anteilen von 0,01 bis 5 Gew.-%, bezogen auf Polyurethanfeststoff, als sog. Kettenabbrecher verwendet werden, zum Beispiel Monoamine oder Monoalkohole sowie Monohydrazidverbindungen. Katalysatoren der an sich bekannten Art können gegebenenfalls als Mischungen von Katalysatoren mitverwendet werden, z. B. tertiäre Amine, organische Metallverbindungen, insbesondere 1,4-Diaza-bicyclo-(2,2,2)-octan oder Zinn-II- bzw. Zinn-IV-Verbindungen.

Als Hilfs- und Zusatzmittel können beispielsweise verwendet werden : Anorganische oder organische Treibmittel, z. B. Methylenchlorid, Monofluortrichlormethan, Dichlordifluormethan, ferner Luft, Kohlendioxid oder Stickoxide ; oberflächenaktive Zusatzstoffe wie Emulgatoren oder Schaumstoffinitiatoren oder Schaumstabilisatoren, Reaktivverzögerer, Zellregler, Pigmente oder Schaumstoffe und/oder Flammschutzmittel, ferner Stabilisatoren gegen Alterungs-, Licht- und Witterungseinflüsse, Weichmacher, fungistatisch oder bakteriostatisch wirkende Substanzen, sowie Füllstoffe. Einzelheiten zu diesen Zusatz- und Hilfsstoffen können der DE-A 2 854 384 auf Seiten 26 bis 31 und den dort zitierten Literaturstellen entnommen werden. Die Schaumstoffherstellung kann sowohl als Freischaum als auch als Formschaum in der üblichen Weise erfolgen. Selbstverständlich können die Schaumstoffe auch zur Blockverschäumung oder nach an sich bekannten Doppeltransportbandverfahren oder irgendeiner weiteren Variante der Schaumstofftechnik hergestellt werden.

Die Elastomerherstellung kann nach Gieß-, Schleuderguß- oder Sprühverfahren in Hand- oder Maschinenmischung der Komponenten nach üblichen Verfahrensweisen erfolgen.

Die erfindungsgemäßen Polymer-Polyetheramine mit aromatischen Aminoendgruppen werden jedoch vorzugsweise mit weiteren höhermolekularen Polyolen oder Kettenverlängerungsmitteln vermischt und auf der « Polyol-Dosierungsseite » als Gemisch eingesetzt. Sie ergeben im allgemeinen besonders thermobelastbare Produkte mit erhöhtem Modul und verbesserter Heißwasserbeständigkeit. Dabei hat sich gezeigt, daß die erfindungsgemäß hergestellten Polymer-Polyether-Polyamine auch in ihren Eigenschaften andersartig hergestellten Polymer-Polyether-Polyaminen überlegen sind.

Die folgenden Beispiele dienen der Erläuterung des erfindungsgemäßen Verfahrens. Wenn nicht anders vermerkt, sind Mengenangaben als Gewichtsteile bzw. als Gewichtsprozente zu verstehen. In den nachfolgenden Beispielen werden folgende Bezeichnungen für Produkte verwendet :

Aminopolyether I :

Dieses Produkt wird [nach einem Verfahren entsprechend der DE-OS 3 039 600 (EP-A 50 275)] in folgender Weise hergestellt : 1 Mol eines linearen Polyoxypropylenetherdiols mit einem Molgewicht von 2 000 und einer OH-Zahl von 56 wird bei 80 °C im Vakuum entwässert und dann bei dieser Temperatur zu einer Vorlage von 2 Mol 2,4-Diisocyanatotoluol getropft. Die Dauer des Eintropfens beträgt 5 Stdn. ; es wird anschließend noch 1,5 Stdn. nachgerührt. Danach beträgt der NCO-Gruppengehalt 3,3 % (Theorie 3,58 %). Das Produkt wird, gelöst in der gleichen Gewichtsmenge Dioxan, bei 10 °C in eine Lösung von 2,02 Mol Kaliumhydroxid (1 % Überschuß) in 590 ml Wasser innerhalb von 5 Stdn. eingetropft, nach kurzem Nachrühren zur Vervollständigung der Reaktion wird die Lösung mit 990 g eines sauren Anionenaustauscherharzes* mit einer Korngröße $< 0{,}2$ mm im Laufe einer Stunde portionsweise versetzt. Es entwickeln sich 35,8 l (ca. 86,6 % der Theorie) Kohlendioxid. Nach Absaugen und Auswaschen (Dioxan) des Austauschers wird das Lösungsmittel abdestilliert, wobei ein Polyetherdiamin mit folgenden Eigenschaften hinterbleibt (2 090 g ≙ 91,5 % der Theorie).

Molekulargewicht : ca. 2 500
Funktionalität : 2
Aminzahl : 40,2
Säurezahl : 0,1
Viskosität : 404 mPa. s/75 °C

Aminopolyether II :

Hergestellt wie I aus einem Polyethertriol vom Molgewicht 6 000, aufgebaut aus Oxypropylen- und Oxyethyleneinheiten mit einem Gehalt an primären OH-Gruppen von mehr als 70 Äquivalentprozent, durch Umsetzung mit 3 Mol Toluylendiisocyanat, alkalische Verseifung zum Carbamat und Zersetzung zum Amin mit einem sauren Anionenaustauscherharz.

NH-Zahl : 22,1
Säurezahl : 0,5
Funktionalität : 3
Viskosität : 3 500 mPa.s/40 °C

Aminopolyether III :

Hergestellt wie I, aus einem Poly-(oxypropylen-oxyethylen)-Blockpolyetherdiol vom Molgewicht 4 000

* Levasorb® A10 der Bayer AG

mit einem Gehalt an primären OH-Gruppen von mehr als 70 Äquivalentprozent, 2 Mol Toluylendiisocyanat, alkalische Verseifung und Zersetzung zum Amin (wie bei I beschrieben).

NH-Zahl : 18,1
Säurezahl : 0,2
Funktionalität : 2
Viskosität : 1 320 mPa.s/75 °C

Aminopolyether IV :

Hergestellt aus einem Poly-(oxypropylen-co-oxyethylen)-Blockpolyethertriol vom Molgewicht 4 800 mit einem Gehalt an primären OH-Gruppen von mehr als 70 Äquivalentprozent, 3 Mol Toluylendiisocyanat, alkalische Verseifung und Zersetzung zum Amin mittels eines sauren Ionenaustauscherharzes (wie bei I beschrieben).

Aminzahl : 25,4
Säurezahl : < 0,05
Funktionalität : 3
Viskosität : 739 mPa.s/75 °C

Polymerpolyol I :

Produkt der in situ-Polymerisation von Styrol und Acrylnitril im Verhältnis 40 : 60 in einem linearen Polypropylenglykol vom Molekulargewicht 2 000.

Polymeranteil : 14,6 Gew.-%
OH-Zahl : 47,5
Säurezahl : 0,15
Viskosität : 2 100 mPa.s/23 °C

Polymerpolyol II :

Produkt analog I auf der Basis eines Poly-(oxypropylen-oxyethylen)-Blockpolyethertriols vom Molgewicht 6 000 mit einem Anteil primärer OH-Gruppen von mindestens 70 Äquivalentprozent.

Polymeranteil : 16,0 Gew.-%
OH-Zahl : 23,2
Säurezahl : 0,2
Viskosität : 1 850 mPa.s/23 °C

Polymerpolyol III :

Produkt analog I auf der Basis eines linearen Poly-(oxypropylen-oxyethylen)-Blockcopolyetherdiols vom Molgewicht 4 000 mit überwiegend primären OH-Endgruppen.

Polymeranteil : 15,4 Gew.-%
OH-Zahl : 23,8
Säurezahl : 0,15
Viskosität : 1 620 mPa.s/23 °C

Polymerpolyol IV :

Produkt analog I auf der Basis eines Poly-(oxypropylen-co-oxyethylen)-Blockcopolyethertriols vom Molgewicht 4 800 mit einem Anteil an primären OH-Gruppen > 70 Äquivalentprozent.

Polymeranteil : 14,6 Gew.-%
OH-Zahl : 29,6
Säurezahl : 0,1
Viskosität : 1 484 mPa.s/23 °C

## Beispiel 1

200 g des Aminopolyethers I werden mit 50 g Toluol vermischt und in einem Rührtopf mit Rückflußkühler, Gaseinleitungsrohr und Tropftrichter vorgelegt. Der Reaktor wird mit Stickstoff gespült, dann wird der Inhalt unter Rühren auf 120 °C aufgeheizt. Unter Aufrechterhaltung einer Stickstoffatmosphäre wird nun eine Mischung aus 650 g des gleichen Aminopolyethers, 60 g Styrol, 90 g Acrylnitril, 1,5 g Azoisobutyronitril und 200 g Toluol im Laufe von 5 Stunden zugetropft. Es bildet sich eine gelbliche opake Dispersion, welche von restlichem Monomeren und dem Lösungsmittel durch Strippen im Vakuum einer Ölpumpe bei 100 bis 120 °C befreit wird. Aus der gaschromatographischen Analyse des aufgefangenen Destillats wird die Zusammensetzung des Produkts berechnet. Dieses besitzt folgende Kenndaten :

Polymeranteil : 13,8 Gew.-%
Acrylnitril gebunden : 7,8 Gew.-%
Styrol gebunden : 6,0 Gew.-%
Aminopolyether : 86,2 Gew.-%
Monomerumsatz : 90,7 Gew.-%
Aminzahl : 35,1
Viskosität : 29 000 mPa.s/23 °C
580 mPa.s/70 °C
Basenstickstoff : 0,82 %
tert. N < 0,01 %
sec. N 0,03 %

Vergleichsbeispiel 1 :

Zum Vergleich wurde das Polymerpolyol I, (welches auf dem gleichen Polypropylenetherdiol vom Molgewicht 2 000 basiert wie der in Beispiel 1 verwendete Aminopolyether) entsprechend dem bei dem Aminopolyether I beschriebenen Verfahren in den polymermodifizierten Aminopolyether überführt. Hierzu wurde 1 Mol Polymerpolyol I (scheinbares Molgewicht 2 360) mit 2 Mol Toluylendiisocyanat (2,4-Isomeres) umgesetzt, das Präpolymer zum Carbamat verseift und dieses zum freien Amin zersetzt. Das resultierende polymermodifizierte, hochviskose Polyetherdiamin ist durch folgende Daten gekennzeichnet :

Polymeranteil : 13,4 Gew.-%
Aminzahl : 36,5
Viskosität : 300 000 mPa.s/40 °C

Beispiele 2-4

In analoger Weise wurden die Aminopolyether II, III und IV der in situ-Polymerisation mit Styrol und Acrylnitril unterworfen. In der nachfolgenden Tabelle sind die Kenndaten der resultierenden erfindungsgemäßen Produkte zusammengestellt :

| Beispiel | 2 | 3 | 4 |
|---|---|---|---|
| Ausgangsprodukt | | | |
| Aminopolyether | 2 | 3 | 4 |
| Polymeranteil (%) | 12,7 | 13,0 | 14,2 |
| Acrylnitril geb. (%) | 7,0 | 7,2 | 7,9 |
| Styrol geb. (%) | 5,7 | 5,8 | 6,3 |
| Aminopolyether (%) | 87,3 | 87,0 | 85,8 |
| Aminzahl (mg KOH/g) | 19,5 | 15,7 | 22,8 |
| Viskosität (mPa.s/23 °C) | 19000 | 24000 | 20500 |
| Basenstickstoff (%) | 0,38 | 0,34 | 0,47 |
| tert. N (%) | < 0,01 | 0,01 | < 0,01 |

Vergleichsbeispiele 2-4

Ebenso wie in Vergleichsbeispiel 1 wurden die hinsichtlich des Basispolyols den Aminopolyethern II, III und IV entsprechenden Polymerpolyole II, III und IV in den jeweiligen polymermodifizierten Aminopolyether überführt, die durch die in der nachstehenden Tabelle aufgeführten Daten gekennzeichnet sind. Der Vergleich der so gewonnenen Produkte mit den erfindungsgemäß hergestellten polymermodifizierten Aminopolyethern zeigt, daß letztere sich durch eine wesentlich niedrigere Viskosität auszeichnen, die sie auch einer maschinellen Verarbeitung auf üblichen PUR-Misch- und -Verarbeitungsaggregaten zugänglich macht.

| Vergleichsbeispiel | 2 | 3 | 4 |
|---|---|---|---|
| Ausgangsprodukt : | | | |
| Polymerpolyol | II | III | IV |
| Polymeranteil (%) | 15,1 | 14,5 | 13,9 |
| Aminzahl (mg KOH/g) | 19,4 | 20,1 | 25,8 |
| Viskosität (mPa.s/23 °C) | nicht meßbar ; alle Produkte besitzen pastöse Konsistenz | | |

Beispiel 5 (Vergleichsbeispiel)

100 g eines Polyethertriamins mit aliphatisch gebundenen primären Aminoendgruppen, welches durch Umsetzung eines Polyoxypropylen-oxyethylen-Blockcopolyethertriols mit überwiegend primären OH-Endgruppen und einem Molekulargewicht von 6 000 mit Ammoniak unter Druck erhalten worden war, wurde mit 50 g Acrylnitril 1 Stunde lang unter Rückfluß gekocht. Anschließend wurde das Acrylnitril vollständig abdestilliert.

Das Produkt enthielt 0,47 % Gesamt-Basenstickstoff, davon entfielen auf prim. N 0,01 %, auf sek. N 0,3 % und auf tert. N 0,16 %, d. h. daß ca. ein Drittel aller Aminogruppen zweifach mit Cyanethylgruppen substituiert waren und somit für Polyadditionsreaktionen nicht mehr zur Verfügung standen.

Beispiel 6

Herstellung eines hochelastischen (kalthärtenden) Weichschaumstoffs. In der nachfolgenden Versuchsreihe wurden nebeneinander die folgenden Polyether unter im wesentlichen identischen Bedingungen in Weichschaumstoffe überführt.

a) Polymermodifizierter Aminopolyether ; erfindungsgemäßes Produkt aus Beispiel 2.

b) Polymermodifizierter Aminopolyether ; nicht erfindungsgemäßes Produkt aus Vergleichsbeispiel 2.

c) Das den beiden vorgenannten Produkten zugrundeliegende Polyethertriol, welches ein auf Trimethylolpropan gestartetes Poly-(propylenoxid-ethylenoxid)-blockcopolyethertriol mit einem Molgewicht von 6 000, einer Hydroxylzahl von 28 und einem Anteil an primären OH-Gruppen > 70 % des gesamten Hydroxylgehalts darstellt.

Die Polyether wurden in den angegebenen Mengen mit Wasser und Schäumhilfsmitteln verrührt, dann wurde das Isocyanat zugegeben und die Mischung nach intensivem Rühren in eine rechteckige Papierform eingegossen. Die Mengenangaben beziehen sich auf Gew.-Teile. Von den resultierenden Schaumstoffen wurden Rohdichte und Stauchhärte ermittelt.

| Versuch | 6.1 | 6.2 | 6.3 |
|---|---|---|---|
| Prod. aus Beispiel 2 | 25 | — | — |
| Aminopolyether II | — | 25 | — |
| Polyethertriol | 75 | 75 | 100 |
| Wasser | 3 | 3 | 3 |
| ®Dabco 33 LV[1)] | 0,8 | 0,8 | 0,8 |
| ®Catalyst A-1[2)] | 0,1 | 0,1 | 0,1 |
| Silikonstabilisator[3)] | 0,2 | 0,3 | 0,2 |
| Polyisocyanat[4)] | 51 | 51 | 52 |
| NCO/OH-Index | 100 | 100 | 100 |
| Rohdichte (kg/m³) nach DIN 53420 | 46 | 43 | 45 |
| Stauchhärte bei 40 % Verformung (kPa) nach DIN 53577 | 8,6 | 7,0 | 6,0 |

1) Handelsüblicher Verschäumungskatalysator der Fa. Air Products and Chemicals, Inc. (Triethylendiamin ; 33 %ig in Dipropylenglykol).

2) Handelsüblicher Verschäumungskatalysator der Fa. UCC (Dimethylaminoethylether).

3) Polyetherpolysiloxan-Blockcopolymer ; Handelsprodukt der Bayer AG.

4) Diphenylmethandiisocyanatgemisch bestehend aus monomeren Diphenylmethandiisocyanaten und mehrkernigen Polymethylenpolyphenylisocyanaten, charakterisiert durch einen Zweikernanteil von 80 Gew.-% und einem Anteil an 2,4'-Isomer von 20 Gew.-% ; Versuchsprodukt der Bayer AG.

Man erkennt, daß bereits ein Ersatz von 25 % der Polyolkomponente durch einen polymermodifizierten Aminopolyether eine deutliche Steigerung der Stauchhärte mit sich bringt, wobei selbst unter Berücksichtigung der Raumgewichtsdifferenzen das erfindungsgemäße Produkt aus Beispiel 2 dem nicht polymermodifizierten analogen Aminopolyether II überlegen ist.

Beispiel 7

Herstellung von Polyurethanharnstoffelastomeren

Gießelastomere wurden mit den folgenden Reaktionsmischungen erhalten :

(Siehe Tabelle Seite 13 f.)

| | A | B | C |
|---|---|---|---|
| Polyetherprepolymer[1)] | 100 | 100 | 100 |
| Produkt aus Beispiel 1 | 39,6 | — | — |
| Produkt aus Beispiel 3 | — | 83,1 | — |
| Kettenverlängerer[2)] | 9,9 | 9,5 | — |
| Polymerpolyolsystem[3)] | — | — | 70 |

[1)] Prepolymer hergestellt durch Umsetzung eines Polypropylenglykols vom Molekulargewicht 1 500 mit überschüssigem 2,4-Diisocyanatotoluol ; der NCO-Gruppengehalt beträgt 5,2 %.

[2)] 4-Chlor-3,5-diaminobenzoesäureisobutylester

[3)] Gemisch aus 90 Gew.-Teilen Polymerpolyol IV und 10 Gew.-Teilen eines Gemisches isomerer Diaminodiethyltoluole.

Zur Herstellung der Gießmischungen wurde das Präpolymer bei 100 °C im Vakuum kurz entgast und der Kettenverlängerer sowie gegebenenfalls der polymermodifizierte Aminopolyether unter intensivem Rühren eingemischt. Die Mischzeit betrug 30 Sekunden. Die ausgehärteten Prüfkörper wurden nach einer 24-stündigen Temperung bei 110 °C auf ihre mechanischen Eigenschaften geprüft. Dabei wurden folgende Eigenschaftswerte gemessen :

| | A | B | C |
|---|---|---|---|
| Shore-Härte A/D (DIN 53505) | 78/27 | 69/10 | 63/18 |
| Spannung bei 100 % Dehnung (MPa ; DIN 53504) | 4,1 | 2,5 | 2,4 |
| Spannung bei 300 % Dehnung (MPa ; DIN 53504) | 7,0 | 4,7 | 5,5 |
| Bruchspannung (MPa ; DIN 53504) | 12,3 | 6,6 | 7,4 |
| Bruchdehnung (% ; DIN 53504) | 507 | 413 | 364 |
| Weiterreißfestigkeit (KN/m ; DIN 53515) | 21 | 13 | 12 |
| Druckverformungsrest (% ; DIN 53517) 70 h/22 °C | 20,9 | 17,8 | 28,5 |
| 24 h/70 °C | 38,5 | 28,1 | 38,2 |

Beispiel 8

Aus einem Polyethylen-butylenadipatdiol vom Molekulargewicht 2 000 und einem Gemisch isomerer Diisocyanatotoluole (80 Gew.-% 2,4- und 20 Gew.-% 2,6-Diisocyanatotoluol) wurde ein NCO-Prepolymer mit einem Isocyanatgruppengehalt von 3,4 % hergestellt. 100 Gew.-Teile dieses Prepolymeren wurden mit 30 Gew.-Teilen des polymermodifizierten Aminopolyethers aus Beispiel 1 und 6,5 Gew.-Teilen des in Beispiel 6 verwendeten Kettenverlängerers in der beschriebenen Weise vermischt. Aus dieser Mischung gegossene Prüfkörper besaßen folgende mechanische Eigenschaften (Prüfnormen wie in Beispiel 6 angegeben) :

Shore-Härte A/D : 75/24
Spannung bei 100 % Dehnung 3,3 MPa
bei 300 % Dehnung 5,4 MPa
Bruchspannung : 27,0 MPa
Bruchdehnung : 657 %
Weiterreißfestigkeit : 26 KN/m
Druckverformungsrest 70 h/22 °C 20,9 %
24 h/70 °C 33,1 %

Beispiel 9 (Vergleichsbeispiel)

Der in Beispiel 1 beschriebene Versuch wurde wiederholt mit dem Unterschied, daß anstelle des dort verwendeten Aminopolyethers I ein Polyoxypropylenetherdiamin mit primären aliphatischen Aminoendgruppen und einem Molekulargewicht von 2 000 als Ausgangsmaterial eingesetzt wurde, welches von der Jefferson Chem. Comp. unter der Bezeichnung Jeffamine ®D-2 000 auf den Markt gebracht wird und folgende Strukturmerkmale aufweist :

$$NH_2-\underset{CH_3}{CH}.CH_2[O.CH_2.\underset{CH_3}{CH}]_x NH_2 \qquad x \approx 33$$

Es resultierte ein Polymerpolyetherpolyamin mit aliphatischen Aminogruppen mit den folgenden Eigenschaften :

Polymeranteil : 14,3 Gew.-%
Acrylnitril geb. : 8,0 Gew.-%
Styrol geb. : 6,3 Gew-%
Aminopolyether : 85,7 Gew.-%
Monomerumsatz : 94,5 Gew.-%
Aminzahl durch Acetylierung : 39,2 (ber. 48,6)
Viskosität bei 25 °C : 2 850 mPa.s
Gesamt-Basenstickstoff : 1,07 % (ber. 1,15 %)
tert.-Basenstickstoff : 0,13 %

Dieses Produkt wurde in die im Beispiel 7 A) angegebene Rezeptur anstelle des Produktes aus Beispiel 1 eingesetzt. Es war nicht möglich, ohne Beschädigung entformbare Prüfkörper zu erhalten. Die Produkte besaßen eine klebrige Oberfläche und waren von brüchiger, wachsartiger Konsistenz. Eine Messung mechanischer Werte war nicht möglich.

**Patentansprüche**

1. Verfahren zur Herstellung von niedrigviskosen, leicht verarbeitbaren, polymermodifizierten Polyether-Polyaminen mit endständigen Aminogruppen, dadurch gekennzeichnet, daß man

a) endständige aromatische Aminogruppen tragende Polyether-Polyamine, welche ein Molekulargewicht von 800 bis 10 000 und einen Gehalt von 0,3 bis 16 Gew.-% an aromatischen Aminogruppen besitzen,

b) der radikalischen in situ-Polymerisation mit einem oder mehreren olefinisch ungesättigten Monomeren,

c) unter Verwendung üblicher Polymerisationskatalysatoren

in solchen Mengen unterwirft, daß der Polymerisat- bzw. Pfropfpolymerisatanteil im polymermodifizierten Polyether-Polyamin 1 bis 60 Gew.-% beträgt.

2. Verfahren nach Anspruch 1, dadurch gekennzeichnet, daß man als olefinisch ungesättigte Monomere α,β-ungesättigte Nitrile, Vinylgruppen tragenden Aromaten, α,β-ungesättigte Mono- oder Polycarbonsäuren, Ester α,β-ungesättigter Mono- oder Polycarbonsäuren mit ein- oder mehrwertigen Alkoholen, Vinylester, Vinylhalogenide, Vinylidenhalogenide, α,β-ungesättigte Carbonsäureamide, Aminoalkylester ungesättigter Mono- oder Polycarbonsäuren, Hydroxyalkylester α,β-ungesättigter Mono- oder Polyhydroxycarbonsäuren, oder Ester der Vinylphosphonsäuren verwendet.

3. Verfahren nach Ansprüchen 1 und 2, dadurch gekennzeichnet, daß man als ungesättigte Verbindungen Acrylnitril, Methacrylnitril, Styrol, α-Methylstyrol oder Vinyltoluol und gegebenenfalls untergeordnete Mengen an α,β-ungesättigten Mono- oder Polycarbonsäuren oder ihrer Alkylester, oder Gemische der ungesättigten Verbindungen verwendet.

4. Verfahren nach Ansprüchen 1 bis 3, dadurch gekennzeichnet, daß man als Polymerisationsinitiatoren organische Peroxide oder aliphatische Azoverbindungen verwendet.

5. Verfahren nach Ansprüchen 1 bis 4, dadurch gekennzeichnet, daß man als Polymerisationsinitiatoren tert.-Butylperpivalat, tert.-Butylperoktoat, tert.-Butylperbenzoat oder Azoisobutyronitril verwendet.

6. Verfahren nach Ansprüchen 1 bis 6, dadurch gekennzeichnet, daß man als endständige aromatische Aminogruppen tragende Polyetheramine solche verwendet, welche aus NCO-Prepolymeren aus höhermolekularen Polyetherpolyolen, gegebenenfals niedermolekularen Kettenverlängerungsmitteln und überschüssigen Mengen an aromatischen Polyisocyanaten hergestellt werden und durch basische Hydrolyse in die Polyether-Polyamine überführt werden.

7. Endständige aromatische, Aminogruppen tragende polymermodifizierte Polyether-Polyamine mit einem Molekulargewichtvon 800 bis 10 000 und einem Gehalt von 0,3 bis 16 Gew.-% an aromatischen Aminogruppen, dadurch gekennzeichnet, daß sie einen Polymerisat- bzw. Pfropfpolymerisatanteil von 1 bis 60 Gew.-% im polymermodifizierten Polyetheramin beträgt und durch radikalische in situ-Polymerisation mit einem oder mehreren olefinisch ungesättigten Monomeren b) in endständige aromatische Aminogruppen tragenden Polyetheraminen a) unter Verwendung üblicher Polymerisationskatalysatoren c) hergestellt wurde.

8. Verwendung von polymermodifizierten, endständige aromatische Aminogruppen tragenden Polyether-Polyaminen mit einem Gehalt an Polymerisat bzw. Pfropfpolymerisat von 1 bis 60 Gew.-%, einem Molekulargewicht von 800 bis 10 000 und einem Gehalt von 0,3 bis 16 Gew.-% an aromatischen Aminogruppen, hergestellt durch radikalische in situ-Polymerisation von einem oder mehreren olefinisch ungesättigten Monomeren b) in endständige aromatische Aminogruppen tragenden Polyether-Polyaminen zur Herstellung von gegebenenfalls zellulären Polyurethankunststoffen.

**Claims**

1. A process for the production of low viscosity, readily processible, polymer-modified polyether polyamines containing terminal amino groups, characterised in that

a) polyether polyamines containing terminal aromatic amino groups and having a molecular weight of from 800 to 10 000 and an aromatic amino group content of from 0.3 to 16 % by weight, are subjected to

b) radical in situ polymerisation with one or more olefinically unsaturated monomers

c) using standard polymerisation catalysts

in such quantities that the polymer-modified polyether polyamine contains from 1 to 60 % by weight of polymer or graft polymer.

2. A process according to Claim 1, characterised in that α,β-unsaturated nitriles, aromatic compounds containing vinyl groups, α,β-unsaturated mono- or polycarboxylic acids, esters of α,β-unsaturated mono- or polycarboxylic acids with monohydric or polyhydric alcohols, vinyl esters, vinyl halides, vinylidene halides, α,β-unsaturated carboxylic acid amides, aminoalkyl esters of unsaturated mono- or polycarboxylic acids, hydroxyalkyl esters of α,β-unsaturated mono- or polyhydroxy carboxylic acids or esters of vinyl phosphonic acids are used as the olefinically unsaturated monomers.

3. A process according to Claims 1 and 2, characterised in that acrylonitrile, methacrylonitrile styrene, α-methyl styrene or vinyl toluene and, optionally, small quantities of α,β-unsaturated mono- or polycarboxylic acids or their alkyl esters or mixtures of the unsaturated compounds are used as the unsaturated compounds.

4. A process according to Claims 1 to 3, characterised in that organic peroxides or aliphatic azo compounds are used as the polymerisation initiators.

5. A process according to Claims 1 to 4, characterised in that tert.-butyl perpivalate, tert-butyl peroctoate, tert.-butyl perbenzoate or azoisobutyronitrile are used as the polymerisation initiators.

6. A process according to Claims 1 to 6, characterised in that polyether amines containing terminal aromatic amino groups which are produced from NCO-prepolymers or relatively high molecular weight polyether polyols, optionally low molecular weight chain-extending agents and excess quantities of aromatic polyisocyanates and which are converted by basic hydrolysis into the polyether polyamines are used as the polyether amines containing terminal aromatic amino groups.

7. Polymer- modified polyether polyamines containing terminal aromatic amino groups and having molecular weights of from 800 to 10 000 and an aromatic amino group content of from 0.3 to 16 % by weight, characterised in that they contain from 1 to 60 % by weight, characterised in that they contain from 1 to 60 % by weight of polymer or graft polymer in the polymer-modified polyether amine and have been produced by radical in situ polymerisation with one or more olefinically unsaturated monomers b) in polyether amines a) containing terminal aromatic amino groups using standard polymerisation catalysts c).

8. The use of polymer-modified polyether polyamines containing terminal aromatic amino groups and having a polymer or graft polymer content of from 1 to 60 % by weight, a molecular weight of from 800 to 10 000 and an aromatic amino group content of from 0.3 to 16 % by weight, produced by radical in situ polymerisation of one or more olefinically unsaturated monomers b) in polyether polyamines containing terminal aromatic amino groups for the production of optionally cellular polyurethane plastics.

**Revendications**

1. Procédé de préparation de polyéther-polyamines modifiées par des polymères, portant des groupes amino terminaux, à basse viscosité faciles à travailler, caractérisé en ce que l'on soumet

a) des polyéther-polyamines portant des groupes amino aromatiques terminaux, ayant un poids moléculaire de 800 à 10 000 et contenant de 0,3 à 16 % en poids de groupes amino aromatiques,

b) à la polymérisation radicalaire in situ dans un ou plusieurs monomères à insaturation oléfinique,

c) avec utilisation de catalyseurs de polymérisation usuels en quantités

telles que la proportion de polymère ou de polymère greffé dans la polyéther-polyamine modifiée par le polymère soit 1 à 60 % en poids.

2. Procédé selon la revendication 1, caractérisé en ce que l'on utilise en tant que monomères à insaturation oléfinique des nitriles, α,β-insaturés, des composés aromatiques portant des groupes vinyle, des acides mono- ou poly-carboxyliques α,β-insaturés, des esters d'acides mono- ou poly-carboxyliques α,β-insaturés et d'alcools mono- ou polyvalents, des esters vinyliques, des halogénures de vinyle, des halogénures de vinylidène, des carboxamides α,β-insaturés, des esters aminoalkyliques d'acides mono- ou poly-carboxyliques insaturés, des esters hydroxyalkyliques d'acides mono- ou poly-hydroxycarboxyliques α,β-insaturés ou des esters d'acides vinylphosphoniques.

3. Procédé selon les revendications 1 et 2, caractérisé en ce que l'on utilise en tant que composés insaturés l'acrylonitrile, le méthacrylonitrile, le styrène, l'α-méthylstyrène ou le vinyltoluène et le cas échéant des proportions mineures d'acides mono- ou polycarboxyliques α,β-insaturés ou de leurs esters alkyliques, ou des mélanges des composés insaturés.

4. Procédé selon les revendications 1 à 3, caractérisé en ce que l'on utilise en tant qu'inducteurs de polymérisation des peroxydes organiques ou des composés azoïques aliphatiques.

5. Procédé selon les revendications 1 à 4, caractérisé en ce que l'on utilise en tant qu'inducteurs de polymérisation du perpivalate de tert-butyle, du peroctanoate de tert-butyle, du perbenzoate de tert-butyle ou de l'azo-iso-butyronitrile.

6. Procédé selon les revendications 1 à 6, caractérisé en ce que l'on utilise en tant que polyéther-amines portant des groupes amino aromatiques terminaux des polyéther-polyamines qui ont été préparées à partir de prépolymères à groupes NCO de polyétherpolyols à haut poids moléculaire, le cas échéant d'agents d'allongement des chaînes à bas poids moléculaire, et d'un excès de polyisocyanates aromatiques, qu'on a convertis par hydrolyse basique en les polyéther-polyamines.

7. Polyéther-polyamines modifiées par des polymères, portant des groupes terminaux amino aromatiques, de poids moléculaire 800 à 10 000, contenant de 0,3 à 16 % en poids de groupes amino aromatiques, caractérisées en ce qu'elles contiennent de 1 à 60 % de leur poids de polymère ou de polymère greffé et ont été obtenues par polymérisation radicalaire in situ avec un ou plusieurs monomères à insaturation oléfinique b) dans des polyéther-amines a) portant des groupes terminaux amino aromatiques par utilisation de catalyseurs de polymérisation usuels c).

8. Utilisation des polyéther-polyamines modifiées par des polymères, portant des groupes terminaux amino aromatiques, à une teneur en polymère ou polymère greffé de 1 à 60 % en poids, un poids moléculaire de 800 à 10 000 et une teneur en groupes amino aromatiques de 0,3 à 16 % en poids, préparées par polymérisation radicalaire in situ d'un ou plusieurs monomères à insaturation oléfinique b) dans des polyéther-polyamines portant des groupes terminaux amino aromatiques, pour la préparation de résines synthétiques de polyuréthannes éventuellement alvéolaires.